# EUROPEAN PATENT APPLICATION

(11) **EP 3 270 392 A1**
(43) Date of publication of application: **17.01.2018**
(21) Application number: 16305911.6
(22) Date of filing: 13.07.2016
(51) Int. Cl.: H01G 11/06, H01G 11/26, H01G 11/36, H01G 11/46, H01M 4/52, H01M 4/66, H01M 12/00, H01M 4/131, H01M 4/02

(54) **PSEUDOCAPACITIVE MATERIALS FOR SUPERCAPACITOR ELECTRODES**

(71) Applicant: Rhodia Operations, 75009 Paris (FR); UNIVERSITE DE NANTES, 44035 Nantes Cedex 1 (FR); CENTRE NATIONAL DE LA RECHERCHE SCIENTIFIQUE, 75794 Paris Cedex 16 (FR)
(72) Inventor: D'ALENCON, Lauriane, 92130 ISSY-LES-MOULINEAUX (FR); LE MERCIER, Thierry, 93110 RONY-SOUS-BOIS (FR); BUVAT, Gaetan, 44300 NANTES (FR)
(74) Representative: Delenne, Marc

(57) **Abstract**

The present invention relates to the use as a pseudocapacitive electrode material for supercapacitors, of a metal oxide of formula

A₁₋ₓA'ₓCo_{1-y}B_{y}O₃,

Where 0≤x<1, 0≤y<0.5,
said metal oxide presents a perovskite crystal structure, A represents a rare earth metal, A' represents an alkaline earth metal, B represents a transition metal, and A, A' and B may be mixtures of metals, wherein said material is implemented on an electrode comprising a carbonaceous material and said material is loaded on said carbonaceous material with a loading mass greater than 5 mg/cm².
The present invention further relates to pseudocapacitive electrodes for supercapacitors, wherein the material of said pseudocapactive electrode comprises a pseudocapacitive electrode material as defined above, to a supercapacitor comprising at least said pseudocapacitive electrode.
Lastly, the present invention relates to the use of a pseudocapacitive electrode as defined above for manufacturing a supercapacitor.

## Description

### TECHNICAL FIELD

The present invention relates to electrochemical supercapacitors.

Because of growing energy needs since the second half of the twentieth century, research has turned to the development of battery technologies capable of storing and always render more energy. This improvement was seen with the arrival of nickel-cadmium batteries, nickel metal, and more recently the Lithium-ion and Lithium-polymer this last ten years. The use of these devices meet the power needs of nomadic life of electronic devices of all days as the laptop or phone, as well as means of transport such as conventional vehicles or all-electric, trams and buses that require portable power source. The use of accumulators therefore seems be an effective way to meet the energy needs of our society. However a problem arises. Current technologies of batteries, very efficient to deliver and accumulate large amounts of energy are faced with a decrease in their performance (that is to say their ability) for very short use time. This results in a very low specific power. The storage mode of electrical energy under the form of faradic chemical reactions imposes a certain kinetic during charging and discharging, while requiring time on the order of hundreds of seconds to achieve proper performance.

The solution is a complementary technology: Supercapacitors.

### BACKGROUND OF THE INVENTION

Supercapacitors have the ability to store unusually large amounts of charge compared to comparably-sized electrolytic capacitors.

As for batteries, performances of supercapacitors are the subject of very extensive industrial research and are being increased very significantly since these thirty recent years by the use of new materials, new electrolytes or new methods of manufacturing. Today reaching specific energies of the order of a few Wh/kg, this technology remains below the energy performance of the batteries, the latter being almost 20 times higher. However, the specific power is itself 10 times larger and the lifetime of nearly 100 times greater.

Supercapacitors can be classified as electric double layer capacitors (EDLCs), pseudocapacitors and hybrid types. The EDLCs store charge electrostatically, or "non- Faradaically", without a transfer of charge between the electrode and electrolyte. The electrodes in EDLC types are very high surface area carbon electrodes, which can be fabricated from, for example, activated carbon, carbon nanotubes, carbon aerogels, carbon nanofibers, graphene and various composites containing one or more of those materials. The capacitance of these materials is highly dependent on their surface area.

EDLCs generally have high power densities but low energy densities. In other words, the use of activated carbon in the EDLC supercapacitors business today provides mass densities of suitable energy, but low volumetric energy densities. Yet it is this last point that is most important for the integration of supercapacitors in electric systems where space is severely limited (electric or hybrid vehicles such as cars, buses or even trams).

Improved supercapacitors have been developed that store charge by a combination of Faradaic and non-Faradaic mechanisms. Supercapacitors using a combination of Faradaic and non-Faradic mechanisms will be termed herein "pseudocapacitors". Pseudocapacitors, compared to EDLCs, potentially have much higher energy densities than the EDLCs, at the cost of some power density. Each of these phenomena relates to the Faradaic mechanism by which pseudocapacitors store and release energy. Among the materials that have been proposed as pseudocapacitors are various transition metal oxides having relatively high electrical conductivity as an electroactive material (such as V₂O₅, RuO₂, MnO₂, TiO₂ and NiO), Ni(OH)₂, other transition metal compounds such as TiS₂ and BeTe₃, and certain other metal oxides such as SnO₂ and more recently RuO₂ or else an electroactive polymer. Unlike the EDLCs, pseudocapacitors store and release energy through the transfer of charge between the electrode surface and the electrolyte. This charge transfer mechanism is slower than the physical charge storage mechanism of the EDLCs, which results in lower power densities. The pseudocapacitor materials tend to have high electrical resistivity, which is detrimental for high-power capacitance and cycling performance. In addition, high energy densities can only be obtained when the pseudocapacitor material has been fabricated with a very high surface area, which is difficult to do in practice.

As a result, attempts have been made to form nanocomposites in which the pseudocapacitor material is dispersed into or coated onto a more conductive, high surface area substrate. Pseudocapacitor electrode architectures based on these metal oxides generally use some carbon and/or organic binder in the fabrication process. The carbon improves electron transfer between the active material and current collecting plate. The binders hold the metal oxide and carbon particles together forming a continuum.

Pseudocapacitors can have both high energy density and power density.

The metal oxides are pseudocapacitive materials that are the most studied and present the largest industrial prospects. They must meet several requirements: a high specific energy, specific power good and low manufacturing cost. However, pseudocapacitive materials implementing RuO₂ can be expensive, scarce, and toxic, limiting their application and attractiveness.

Since the discovery of RuO₂, the scientific community was interested in MnO₂. Said oxide does not have the negative ecological impact of RuO₂, this pseudocapacitive oxide reported good specific capacity and good resistance in cycling. It is at present the most studied metal oxide pseudocapacitives for its properties. However the value of its energy density is still not optimal.

Moreover, one of the actual challenges in the considered technical field is to increase the volumetric energy density as far as the carbon based electrodes do not reach more than 7 Wh/L.

Document WO2010/096527 discloses an electrode for an electrochemical pseudocapacitor comprising a plurality of electroactive nanoparticles, said nanoparticles having their surface comprising an active material having a nominal formula selected form the group consisting of ABO₃, A₂BO₄, AB₂O₄ and fluorite AO₂, where A and B are metals. However, only LaNiO₃ is synthesized and tested within a pseudocapacitor electrode constructed using nano- LaNiO₃. As reported in example 2 herein after, said material however provides gravimetric capacitances values which are far less than the one obtained with the metal oxide according to the present invention.

The article Yi Cao et al. "synthesis, structure and electrochemical properties of lanthanum manganese nanofibers doped with Sr and Cu", Journal of alloys and Compounds 638 (2015) 204-213 describes the synthesis of an electrode materials of formula LaₓSr₁₋ₓCu_{0.1}Mn_{0.9}O_{3-δ} (0.1≤x≤1). Said material is however free of Co and fails to mention the mass loading in the electrode rendering the interpretation of the disclosed corresponding capacitances questionable with respect to the real impact of the metal oxide itself.

The article Yi Cao et al. "Structure, morphology and electrochemical properties of LaxSr1-xCo0.1Mn0.9O3-δ perovskite nanofibers prepared by electrospinning method", Journal of alloys and Compounds 624 (2015) 31-39 describes the synthesis of an electrode material based on said nanofibers. Said material however contains a restricted amount of Co. Moreover, as it is apparent from the comparative example 3 herein after, the measured pseudocapacitive behavior is in fact not conform with the results announced in said article, which is in particular demonstrated through the comparison in terms of gravimetric capacitance.

The nanofibers are used in another article to build asymmetric supercapacitors (Yi Cao et al, "Symmetric/Asymmetric Supercapacitor Based on the Perovskite-type Lanthanum Cobaltate Nanofibers with Sr-substitution", Electrochimica Acta 178 (2015) 398-406). The properties of LaₓSr₁₋ₓCoO_{3-δ} perovskite nanofibers are investigated alone and coupled with other electrodes in symmetrical and asymmetrical cells. Said material is only used as a very low mass loading in the electrode (1 mg/cm²) with the use of graphite paper as current collector which is not realistic for practical applications.

However, said three articles on one hand are focused on nanofibers and to very specific perovkiste structures which do not offer variations for the meaning of the B metal in the perovskite structure.

Therefore there still exists a need to provide new materials endowed with pseudocapactive properties, much lower toxicity and less expensive that existing metal oxides, in particular that can be suitable with supercapacitors in aqueous electrolytes.

Moreover there exists a need to find out new metal oxide materials with increased volumetric energy density while maintaining a high power density and long cycle life.

Prior to now, there has been no completely satisfactory way to adequately prepare metal oxides with tailored pseudocapacitive properties for achieving a high volumetric energy density.

### SUMMARY OF THE INVENTION

A first object of the present invention is directed to the use as a pseudocapacitive electrode material for supercapacitors, of a metal oxide of formula

A₁₋ₓA'ₓCo_{1-y}B_{y}O₃,

where
0≤x<1
0≤y<0.5
said metal oxide presents a perovskite crystal structure,
A represents a rare earth metal,
A' represents an alkaline earth metal,
B represents a transition metal, and
A, A' and B may be mixtures of metals,
wherein said material is implemented on an electrode comprising a carbonaceous material and said material is loaded on said carbonaceous material with a loading mass greater than 5 mg/cm².

The present invention further relates to a pseudocapacitive electrode for supercapacitors, wherein the material of said pseudocapactive electrode comprises a pseudocapacitive electrode material according to the present invention.

The present invention is moreover directed to a supercapacitor comprising at least an electrode according to the present invention.

At last, the present invention relates to the use of a pseudocapacitive electrode according to the present invention for manufacturing a supercapacitor.

This is the first time a pseudocapacitive behavior is stabilized for a cobalt based compound which usually shows a purely faradic behavior. It opens the pathway for high volumetric energy density oxides showing pseudocapacitive response, fast kinetic, long term cycling efficiency by tuning the nature and amount of the rare earth.

Thus, surprisingly, the inventors have observed that the presence of Co in a significant amount within the metal oxide (0≤<y<0.5) is very advantageous in terms of volumetric capacitance for electrodes containing it, as among all illustrated in example 1.

In the context of the present invention, the expression:
- "crystallographic density" refers to the density of the crystal lattice of said materials, and
- the "volumetric capacitance" of the said material is evaluated by multiplying its gravimetric capacitance by the crystallographic density. Thus the higher the crystallographic density is, the higher the volumetric capacitance is.

The terms "between... and..." and "ranging from... to..." should be understood as being inclusive of the limits, unless otherwise specified.

### BRIEF DESCRIPTION OF THE DRAWINGS

**Figure 1** represents a voltammogram as obtained in example 1.3. More precisely it represents a cyclic voltammogram of La_{0.8}Sr_{0.2}CoO₃ in 5M LiNO₃ at 20 mV.s⁻¹
**Figure 2** represents a voltammogram as obtained in comparative example 2. More particularly is represents a cyclic voltammogram of LaNiO₃ in 5M LiNO₃ at 20 mV.s⁻¹.
**Figures 3a to 3d** depict the cyclic voltammograms of La_{0.3}Sr_{0.7}CO_{0.1}Mn_{0.9}O₃ in 1M KNO₃ at 5 mV.s⁻¹ for figure 3a, 1M KOH at 5 mV.s⁻¹ for figure 3b, 1M H₂SO₄ at 5 mV.s⁻¹ for figure 3c, and 5M LiNO₃ at 20 mV.s⁻¹ for figure 3d as described in comparative example 3.

### DESCRIPTION OF THE PREFERRED EMBODIMENTS

According to a particular embodiment of the present invention, x may range between 0 and 1, in particular between 0.10 and 0.90, more particularly between 0.20 and 0.80 and even more particularly between 0.30 and 0.60.

According to another embodiment of the present invention y may range between 0 and 0.50, in particular between 0 and 0.40, and more particularly between 0 and 0.30, for example between 0 and 0.20. The most preferably y = 0.

A represents a rare earth metal.

A' represents an alkaline earth metal.

B represents a transition metal.

Conventionally, A₁₋ₓA'ₓCo_{1-y}B_{y}O₃ extends to formula A₁₋ₓA'ₓCo_{1-y}ByO_{3-δ}. In other words, the man skilled in the art typically uses said second formula to reflect the fact that the oxygen amount may slightly vary depending on some material preparation parameters. In fact, 3-δ may vary between 3 and 2.6.

δ is a value that cannot be accurately defined. It depends on numerous parameters and among all (1) on the oxidation degree of Co, (2) on the potential ratio between A' and A and Co and B, (3) on the atmosphere when the thermal treatment is performed. In other words the exact value of δ is not available. This is commonly admitted by the man skilled in the art.

Therefore, the present invention aims to cover the use as a pseudocapacitive electrode material for supercapacitors of a metal oxide of formula A₁₋ₓA'ₓCo_{1-y}B_{y}O_{3-δ}, wherein A, A', B, x, y and δ are as defined above.

Each of A, A' and B may be mixtures of metals.

According to a particular embodiment, A represents an element of the lanthanide series, in particular La, Ce, Pr, Nd, Sm, Eu, Gd, Tb, Dy, Ho, Er, Tm, Yb or Lu, , more particularly La, Pr, Nd, Sm, Gd, Yb and even more particularly La and Gd.

According to a further particular embodiment, A' represents Sr, Ca, Mg, Ba, Na or K, in particular Sr, Ca or Ba, alternatively Sr or Ca and more particularly Sr.

According to a further embodiment, B represents a transition metal chosen among Ni, Fe, Mn, Ti, Cr, Cu, V and Zn, in particular chosen among Ni, Fe, Mn and Cr and more particularly chosen among Ni, Fe and Mn.

According to a particular embodiment, A is La.

According to a further particular embodiment, A' represents Sr or Ca and is preferably Sr.

According to a further embodiment, B represents a transition metal chosen among Ni, Fe and Mn.

According to another particular embodiment, A is La, A' represents Sr or Ca and B represents a transition metal chosen among Ni, Fe and Mn.

According to another particular embodiment, the metal oxide is a ternary metal oxide, i.e. neither of A, A' are mixtures of metal and y=0.

According to another particular embodiment, the metal oxide is a ternary metal oxide of formula A₁₋ₓA'ₓCoO₃.

According to a preferred embodiment of the invention, the metal oxide has the formula La₁₋ₓSrₓCoO₃ where 0≤x<0.90, in particular where 0.20≤x<0.80, and more particularly where 0.30≤x<0.60.

The substitution of an element A^{+III} by an element A'^{+II} in a perovskite structure A^{+III}B^{+III}O₃ allows to have an element B with mixed valence +III and +IV. The addition of strontium in the LaCoO₃ structure allows to obtain the following stoichiometry La₁₋ₓSrₓCoO₃ where cobalt is a mixture of Co^{+III} and Co^{+IV}. The possibility of having a member of divalent transition within a structure is an interesting electronic property that may lead to a pseudocapacitive storage.

The metal oxide according to the present invention may be under the form of nanometric particles. Said nanometric particles may typically present an average largest dimension of from 5 to 900 nm, in particular from 10 to 200 nm, and more particularly from 10 to 100 nm.

The average specific surface area of said nanometric particles may range from 1 to 600 m²/g, in particular from 5 to 200 m²/g, and more particularly from 5 to 30 m²/g, according to BET measurements.

The BET measurements are performed according to classical methods known by the man skilled in the art.

The electrochemical performance of the metal oxide according to the invention is linked to the mean oxidation state of cobalt, which can be easily controlled during its synthesis by varying the amount of Sr-doping.

A high volumetric energy density is reached thanks to the high volumetric density of the compound.

Typically, the volumetric energy density of the metal oxide of the present invention may range between 1 and 100 Wh/L in particular between 2 and 20 Wh/L, and more particularly between 5 and 15 Wh/L.

### Metal oxide manufacturing process

The metal oxide according to the present invention may be obtained by a sol-gel synthesis called "Pechini method." This method is based on the use of an acid and a polyol for obtaining nanometric powders. This wet synthesis uses the ability of certain acids to form a complex with metal ions in solution. Heating the polyol provides a gel containing metal ions by esterification, and when the solvent evaporates completely, the combustion of all leads to the formation of a metallic powder having the stoichiometry and the desired structure. Said method is represented in the following scheme 1.

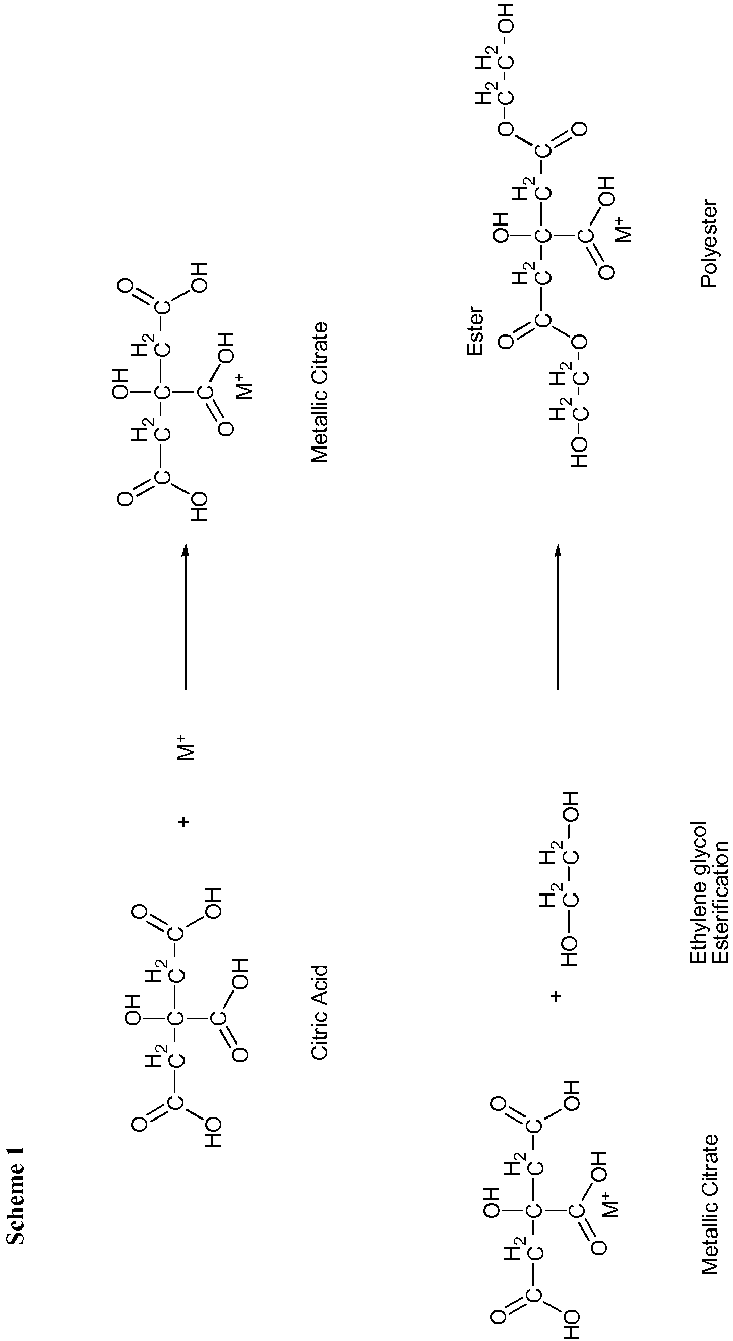

The metal ions come from the used precursors.

When A comprises La, the corresponding precursor may be lanthanum nitrate (La(NO₃)₃, 6H₂O).

When A' comprises Sr, the corresponding precursor may be strontium nitrate (Sr(NO₃)₂).

For Co, the corresponding precursor may be cobalt acetate (Co(CH₃COO)₂, 4H₂O.

Chlorides acetates or nitrates precursors of La and Sr may for example alternatively be chosen for carrying out the process, for example acetates of La and Sr and nitrates of Co.

Each metal precursor may be dissolved in a small volume of water. The precursors in solution can then be mixed together. The resulting solution may then be added to the citric acid/ethylene glycol under magnetic stirring at a speed that may range between 100 and 800, in particular between 200 and 500, for example at 400 rpm. The mixture may then be heated to a temperature ranging from 40°C to 100°C, in particular from 70°C to 90°C until the evaporation of the solvent and until obtaining a gel. The gel may then be calcined at a temperature ranging from 150°C to 600°C, in particular from 200°C to 400°C. Heating may be stopped when the entire calcination has occurred. The resulting powder can then be grounded in a mortar and subjected to one or more thermal treatments at a temperature ranging from 300°C to 1200°C, in particular from 500°C to 900°C, for example at 700 °C for 0.5 to 24 hours, in particular for 3 to 5 hours, for example for 5 hours.

According to a particular embodiment, the gel may be calcinated directly at 300 °C and after it may be heated at various temperatures between 700 and 900°C, more preferably between 800 to 900°C, for example for 4 to 6 hours.

### Pseudocapacitive electrode

The present invention further relates to an electrode for supercapacitor, wherein said electrode comprises a pseudocapacitive electrode material according to the present invention.

The pseudocapacitive material according to the present invention may be implemented within asymmetric supercapacitors, which have been proposed as a way to overcome the problem of producing high surface area pseudocapacitors, and to try to combine the high power density of an EDLC with the high energy density of a pseudocapacitor. In one approach, nanoparticles or nanocoatings of a pseudocapacitor material are applied to or mixed with carbonaceous material, and in particular with a high surface area carbon substrate, to form suitable electrodes.

The electrode according to the present invention is an electrode comprising a composite material and thus comprises a carbonaceous material in addition to the pseudocapacitive electrode material according to the present invention. It follows that according to a particular embodiment, said electrode comprises a mixture of carbonaceous material and of metal oxide according to the present invention.

According to a particular embodiment, the pseudocapacitive electrode material is loaded on said carbonaceous material with a loading mass ranging from 5 to 20 mg/cm², in particular ranging from 5 to 15 mg/cm² and more particularly ranging from 8 to 15 mg/cm².

The carbonaceous material may be selected from activated carbon, carbon black, graphene, mesoporous carbon, carbon fibers, porous graphite, graphitized carbon, graphite powder, oriented pyrolytic graphite, glassy carbon, carbon aerogel, single wall carbon nanotubes and multi-wall carbon nanotubes. The carbonaceous material may be or include a polymer that has been carbonized by exposure to high temperature in a non-oxidizing atmosphere. Examples of polymers that can be carbonized in such a manner include, for example, polyacrylonitrile, phenolic resins, phenol formaldehyde resins, polyacenaphthalene, polyacrylether, polyvinylchloride, polyvinylidene chloride, poly(p-phenylene terephthalamide), poly-L-lactide, various polyimides, polyurethanes, nylons, polyacrylonitrile copolymers, such as poly(acrylonitrile-methyl acrylate), poly(acrylonitrile-methyl methacrylate), poly(acrylonitrile-itaconic acid-methyl acrylate), poly(acrylonitrile-vinyl pyridine), poly(acrylonitrile-vinyl chloride) and poly(acrylonitrile-vinyl acetate).

According to a particular embodiment, the carbonaceous material is carbon black.

According to a preferred embodiment, the carbonaceous material can be porous. Said porosity may result from the form of said carbonaceous material. Typically, it may be in the form of foam, woven, non-woven, matted or entangled fibers, compressed fine powders (including compressed nanofibers), nanotubes or exfoliated layered materials.

The composite material for manufacturing the electrode may be formed in any conventional manner known to the man skilled in the art.

If the composite material is in the form of a powder, a binder may be used for ensuring homogeneity of the mixture and an acceptable mechanical strength of the electrode.

Said binder may be chosen among Poly tetra fluoro ethylene (teflon), polyvinlyl difluoride, polylactic acid, Styrene Butadiene Rubber (SBR), Carboxymethylcellulose (CMC). Said list is however not restrictive.

According to a particular embodiment, the carbonaceous material is present in the electrode in an amount of less than 60%, in particular from 10 to 40 %, and more particularly from 20 to 30% by weight, with respect to the total weight of the electrode.

According to a particular embodiment, the metal oxide according to the present invention is present in the electrode in an amount ranging from 50 to 100%, in particular from 60 to 90% and more particularly from 60 to 80% by weight, with respect to the total weight of the electrode.

According to a particular embodiment, the binder is present in the electrode in an amount ranging from 2 to 15%, in particular from 5 to 15% and more particularly from 5 to 10% by weight, with respect to the total weight of the electrode.

Further, according to a particular embodiment, the carbonaceous material is present in the electrode in an amount of less than 40% by weight, the metal oxide according to the present invention is present in the electrode in an amount ranging from 5 to 60% by weight and the binder is present in the electrode in an amount ranging from 1 to 10% by weight.

These percentages may be chosen in order to reach the best compromise between mechanical strength and conductivity.

According to a particular embodiment, still when the composite material is in the form of a powder, a method with or without solvent can be used, for manufacturing of electrodes, and in particular without solvent.

The mixture may then be obtained by mixing all components in a mortar, or in a blender, or in a mechanical grinder, or in a ball milling apparatus, for obtaining a homogeneous paste.

Alternatively, an electrode may be manufactured by preparing an ink or a slurry or a paste made by dispersion of the different components in a solvent (water, ethanol, propanol, butanol, acetone, N-methyl pyrolidone, ...) . The resulting slurry is then coated on a current collector by dip-coating, bar-coating, spin coating, spray coating, doctor blade, cold rolling.

Alternatively, an electrode may be manufactured by first obtaining the carbonaceous material into the shape of the electrode and then form the composite material by depositing the metal oxide by a classical deposition method such as dip-coating, bar-coating, spin coating, spray coating, electrodeposition onto said electrode.

The metal oxide according to the present invention may typically be deposited in the form of a film having a thickness of 10 to 500 µm, in particular of 100 nm to 100 µm on a current collector to form an electrode.

The mixture or the slurry may then be pressed in order to obtain the final electrodes according to manufacturing procedure known from the man skilled in the art, preferably pressed at on a stainless steel (or copper, or aluminum, or titanium, or carbon) grid or foil or fabric (between 100 and 1000 MPa).

Electrodes of the invention may present specific volumetric capacitance ranging between 100 and 1000, in particular between 100 and 800 F/cm³, in particular between 200 and 600 F/cm³, and more particularly between 200 and 500 F/cm³ relative to the crystallographic density.

Electrodes of the invention may present specific gravimetric capacitance ranging between 5 and 200 F/g, in particular between 10 and 100 F/g, and more particularly between 10 and 50 F/g.

### Supercapacitors

The present invention further relates to a supercapacitor comprising at least one electrode according to the present invention.

The supercapacitor may adopt any design as known by the man skilled in the art.

According to a particular embodiment, the supercapacitor is a hybrid system.

Hybrid supercapacitors typically comprise two different electrodes operating according to different electrochemical mechanisms (which is the reason for the term hybrid supercapacitor), one of which works in a similar albeit different way than the anode in lithium batteries. In principle such hybrid supercapacitors combine the energy storage principle of a lithium-ion secondary battery and an electric double-layer capacitor.

According to a further particular embodiment, the supercapacitor is a symmetric system or an asymmetric system.

As asymmetric systems one may cite systems where one of the electrodes is an electrode according to the present invention and the other is an activated carbon electrode or an oxide (Fe₃O₄, V₂O₅, MnO₂...) or a nitride (MoₓN, VN, TiN...) that possess a complementary electrochemical window in order to enlarge the cell voltage.

Alternatively, hybrid devices integrating the said electrode and a battery type electrode (Ni(OH)₂, PbO₂...) may be designed.

According to a particular embodiment, the supercapacitor comprises two electrodes, each electrode being in electrical contact with an electrically conductive current collector, said electrodes being spaced apart and having an electrolyte interposed between and supported by a separator (cellulose, glass fiber paper, Celgard, ...) or impregnated into a gel (see later on) and in contact with each of said electrodes, wherein at least one of the electrodes is a metal oxide pseudocapacitor material according to the present invention deposited thereon *via* the deposition methods as described above and eventually chemically bonded to the carbonaceous material, the oxide pseudocapacitor material being in the form of nanometric particles or a film having a thickness of from 1nm to 200 µm and constituting 10 to 90 % of the weight of the composite.

The electrolyte as interposed between the electrodes may be of any nature as known by the man skilled in the art. In particular, the electrolyte can be a solid or a fluid.

Fluid electrolytes in supercapacitors may be aqueous electrolyte solutions, organic electrolyte solution, or ionic liquids, which are all embodiments that are compatible with the present invention.

Organic electrolyte solutions include one or more organic solvents in which are dissolved one or more salts. The organic solvent may include, for example, one or more linear alkyl carbonates, cyclic carbonates, cyclic esters, linear esters, cyclic ethers, alkyl ethers, nitriles, sulfones, sulfolanes, siloxanes and sultones. Mixtures of any two or more of the foregoing types can be used. Cyclic esters, linear alkyl carbonates, and cyclic carbonates are preferred types of nonaqueous solvents. Suitable linear alkyl carbonates include dimethyl carbonate, diethyl carbonate, methyl ethyl carbonate and the like. Cyclic carbonates that are suitable include ethylene carbonate, propylene carbonate, butylene carbonate and the like. Suitable cyclic esters include, for example, γ-butyrolactone and γ-valerolactone. Among organic electrolytes solvents acetonitrile and propylene carbonate may be more particularly cited.

The dissolved salt in an organic electrolyte may be, for example, a quaternary ammonium salt such as a tetraalkylammonium salt, any of various alkali or alkaline earth metal salts, sulfuric acid, potassium hydroxide, sodium hydroxide or lithium hydroxide.

Polymer gel electrolytes are also useful. Examples of such electrolytes include polyurethane-LiCF₃S0₃, polyurethane-lithium perchlorate, polyvinylacohol-KOH-H₂O, polyvinylacohol-K₂SO₄-H₂O, poly(acrylonitrile)-lithium salts, poly(acrylonitrile)-quaternary ammonium salts, and poly(ethylene oxide)-grafted poly(methyl)-methacrylate-quaternary ammonium salts. Additionally, other compounds such as ethylene carbonate and propylene carbonate can also be incorporated into the polymer matrix.

According to a particular embodiment, the electrolyte is an aqueous electrolyte solution which includes KOH, H₂SO₄, K₂SO₄, Li₂SO₄, Na₂SO₄ and LiNO₃.

### Application

The supercapacitor of the invention is useful as energy supply/capture devices in automobiles and other vehicles such as trams and buses; and as power supply/storage devices for a wide range of electrical and electronic devices. They are particularly useful in rechargers for rechargeable products such as power tools, cordless phones, cell phones, computers, personal computing devices, portable electronic game players, flashlights and electric shavers.

In the description and in the examples that follow, unless otherwise mentioned, the percentages are weight percentages.

The examples below are presented as non-limiting illustrations of the field of the invention.

### EXAMPLES

### Example 1: Preparation and electrochemical test of an electrode based on the metal oxide La₁₋ₓSrₓCoO₃ with various x values

### 1. Preparation of the pseudocapacitive material

Phase-pure La₁₋ₓSrₓCoO₃ with different x values (0.2≤x≤0.8) were synthesized *via* the sol-gel Pechini method as described above.

Metal nitrates and cobalt acetate were dissolved separately in small amounts of distilled water (see table 1 hereinafter for amounts).

The 3 solutions were then mixed together under magnetic stirring before adding citric acid and ethylene glycol (ratios metal cations: citric acid: ethylene glycol = 1:4:12). The obtained mixture was heated at about 80°C on a thermal plate under magnetic stirring (400 rpm) until a viscous purple gel was formed.

Calcination of the gel at 300°C in air was performed before final heating treatment at various temperatures (700-900°C) for 5 hours.

The amounts of citric acid and ethylene glycol are defined by the molar ratio 1: 4: 12 (where 1 is the number of moles of metal ions, 4 the number of moles of citric acid and 12 moles of ethylene glycol)

**Table 1: detailed mass of used reactives**

| x | M (g/mol) | n (mol) | A (g) | B (g) | C (g) | CA (g) | EG (g) |
|---|---|---|---|---|---|---|---|
| 0.2 | 235.58 | 0.0042 | 1.470 | 0.180 | 1.057 | 6.524 | 6.323 |
| 0.4 | 225.32 | 0.0044 | 1.153 | 0.376 | 1.105 | 6.821 | 6.611 |
| 0.6 | 215.07 | 0.0046 | 0.805 | 0.590 | 1.158 | 7.146 | 6.927 |
| 0.8 | 204.81 | 0.0049 | 0.423 | 0.827 | 1.126 | 7.504 | 7.274 |

In table 1, A denotes La(NO₃)₃,6H₂O; B denotes Sr(NO₃)₂; C denotes Co(CH₃COO)₂4H₂O; CA denotes citric acid and EG denotes ethylene glycol.

The BET specific surface areas of the obtained samples are presented in table 2.

**Table 2: Specific surface areas of the obtained samples**

| x | Synthesis temperature (°C) | Specific surface area (m².g⁻¹) |
|---|---|---|
| 0.2 | 700 °C | 13.9 |
| 0.4 | 700 °C | 14.2 |
| 0.4 | 900°C | 7.7 |
| 0.6 | 900 °C | 8.8 |
| 0.8 | 900°C | 8.8 |

### 2. Preparation of the electrodes

To form the electrodes, the obtained metal oxide powders were mixed in ethanol with conductive carbon black and Polytetrafluoroethylene (PTFE). By evaporating the solvent, a black paste was obtained which was laminated to form a film of about 100µm thickness. Disk-shaped electrodes (12 mm diameter) were cut out from the film and then pressed at 900 MPa onto stainless steel grids used as current collectors.

### 3. Electrochemical characterization

The electrochemical experiments were conducted in a 3 electrode cell assembly, using Ag/AgCl (3M NaCl) as the reference electrode and a platinum grid as the counter electrode. Electrodes as obtained above were tested between 0 and 1 V vs. Ag/AgCl in different aqueous electrolytes (5M LiNO₃, 0.5M K₂SO₄, 1M KOH) at room temperature.

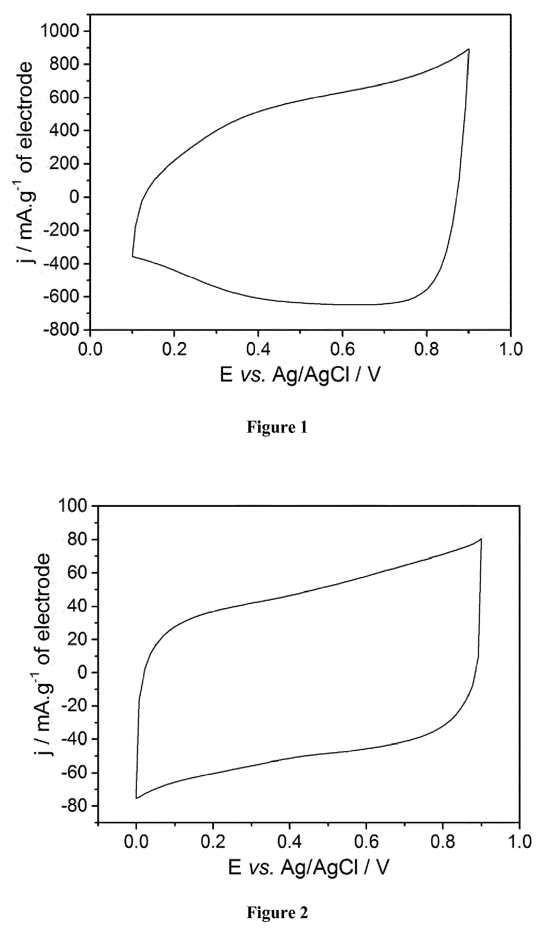

A voltammogram is obtained as represented in figure 1 for La_{0.8}Sr_{0.2}CoO₃ in 5M LiNO₃ at 20 mV.s⁻¹.

The rectangular shape of the obtained voltammograms is characteristic of a pseudocapacitive behavior.

The following table 3 depicts the gravimetric capacitances measured for various metal oxides on 2 different electrolytes.

**Table 3**

| Sample | Synthesis temperature | KOH 1M | LiNO₃ 5M |
|---|---|---|---|
| | | Gravimetric capacitance (F/g) | Gravimetric capacitance (F/g) |
| x = 0.2 | 700°C | 54 | 59 |
| x = 0.4 | 700°C | 54 | 53 |
| x = 0.4 | 900°C | 18 | 20 |
| x = 0.6 | 900°C | 51 | 47 |
| x = 0.8 | 900°C | 20 | 18 |

It has been observed that impurities may be present is some prepared metal oxides. For example for x = 0.4 at 700 °C visible impurities SrCoO_{2.5} (hexagonal) could be observed, which were not present at 900 °C.

The following table 4 depicts the volumetric capacitances of 5 materials in two different aqueous electrolytes.

Said volumetric capacitance may be calculated by taking a crystallographic density of 6.8. This density depends in reality the Sr substitution and real lattice parameters, but this is the order of magnitude 0.3 near.

**Table 4**

| Sample | Synthesis temperature | KOH 1M | LiNO₃ 5M |
|---|---|---|---|
| | | Volumetric capacitance (F/cm³) | Volumetric capacitance (F/cm³) |
| x=0.2 | 700°C | 367 | 401 |
| x=0.4 | 700°C | 367 | 360 |
| x=0.4 | 900°C | 122 | 136 |
| x=0.6 | 900°C | 347 | 320 |
| x=0.8 | 900°C | 136 | 122 |

As a conclusion, very interesting volumetric capacitances were obtained, in particular for x=0.2.

### Example 2 (comparative example): Preparation and electrochemical test of an electrode based on the metal oxide LaNiO₃

Such a metal oxide is disclosed in WO2010/096527.

### 1. Preparation of the material

Phase-pure LaNiO₃ was synthesized *via* the sol-gel Pechini method as described above.

Metal nitrates were dissolved separately in small amounts of distilled water (see table 4 below for amounts).

The 2 solutions were then mixed together under magnetic stirring before adding citric acid and ethylene glycol (ratios metal cations: citric acid: ethylene glycol = 1:4:12). The obtained mixture was heated at about 80°C on a thermal plate under magnetic stirring (400 rpm) until a viscous green gel was formed.

Calcination of the gel at 300°C in air was performed before final heating treatment at 700°C for 5 hours.

The amounts of citric acid and ethylene glycol are defined by the molar ratio 1: 4: 12 (where 1 is the number of moles of metal ions, 4 the number of moles of citric acid and 12 moles of ethylene glycol)

**Table 5: Detailed mass of used reactives**

| M (g/mol) | n (mol) | A (g) | B (g) | CA (g) | EG (g) |
|---|---|---|---|---|---|
| 245.60 | 0.0041 | 1.765 | 1.208 | 6.258 | 6.065 |

In table 5, A denotes La(N0₃)₃,6H₂O; B denotes Ni(NO₃)₂ 6H₂O; CA denotes citric acid and EG denotes ethylene glycol.

### The BET specific surface area of the obtained sample was 7.4 m²/g.

### 2. Preparation of the electrodes

The preparation of the electrodes was made according to the description presented in example 1.

### 3. Electrochemical characterization

The electrochemical experiments were conducted using the same procedure as described in example 1.

A voltammogram is obtained as represented in figure 2. The gravimetric capacitance of the compound is about 2 to 3 F.g⁻¹.

As a conclusion, the gravimetric capacitance of the metal oxide according to the present invention is at least 6 times higher than the gravimetric capacitance of said comparative example sample LaNiO₃.

### Example 3 (comparative example): Preparation and electrochemical test of an electrode based on the metal oxide La_{0.3}Sr_{0.7}Co_{0.1}Mn_{0.9}O₃ (according to the work published by Cao et al. in Journal of Alloys and Compounds 624 (2015) 31-39)

### 1. Preparation of the material

Phase pure La_{0.3}Sr_{0.7}CO_{0.1}Mn_{0.9}O₃ was synthesized *via* the sol-gel Pechini method as described above.

Metal nitrates were dissolved separately in small amounts of distilled water (see table 5 below for amounts).

The 4 solutions were then mixed together under magnetic stirring before adding citric acid and ethylene glycol (ratios metal cations: citric acid: ethylene glycol = 1:4:12). The obtained mixture was heated at about 80°C on a thermal plate under magnetic stirring (400 rpm) until a viscous purple gel was formed.

Calcination of the gel at 300°C in air was performed before final heating treatment at 700°C for 2 hours.

The amounts of citric acid and ethylene glycol are defined by the molar ratio 1:4: 12 (where 1 is the number of moles of metal ions, 4 the number of moles of citric acid and 12 moles of ethylene glycol).

**Table 6: detailed mass of used reactants**

| M (g/mol) | n (mol) | A (g) | B (g) | C (g) | D (g) | CA (g) | EG (g) |
|---|---|---|---|---|---|---|---|
| 206.258 | 0.0048 | 0.623 | 0.718 | 0.121 | 1.069 | 7.452 | 7.222 |

In table 6, A denotes La(NO₃)₃, 6H₂O; B denotes Sr(NO₃)₂; C denotes Co(CH₃COO)₂, 4H₂O; D denotes Mn(CH₃COO)₂, 4H₂O; CA denotes citric acid and EG denotes ethylene glycol.

### The BET specific surface area of the obtained sample is 29.6 m²/g.

### 2. Preparation of the electrodes

The preparation of the electrodes was made according to the description presented in example 1.

### 3. Electrochemical characterization

The electrochemical experiments were conducted using the same procedure as described in example 1.

Electrodes as obtained above were tested in different aqueous electrolytes (1M KNO₃, 1M KOH, 1M H₂SO₄) at room temperature with a scan rate of 5 mV.s⁻¹ according to the paper of Cao *et al..* In order to compare with example 1 and 2, an electrode was tested in LiNO₃ 5M electrolyte with a scan rate of 20 mV.s⁻¹.

The following table 7 depicts the gravimetric capacitance measured on 3 different electrolytes.

**Table 7**

| Electrolyte | KNO₃ 1M | KOH 1M | LiNO₃ 5M |
|---|---|---|---|
| Capacitance (F/g) | 8.7 | 38 | 8.0 |

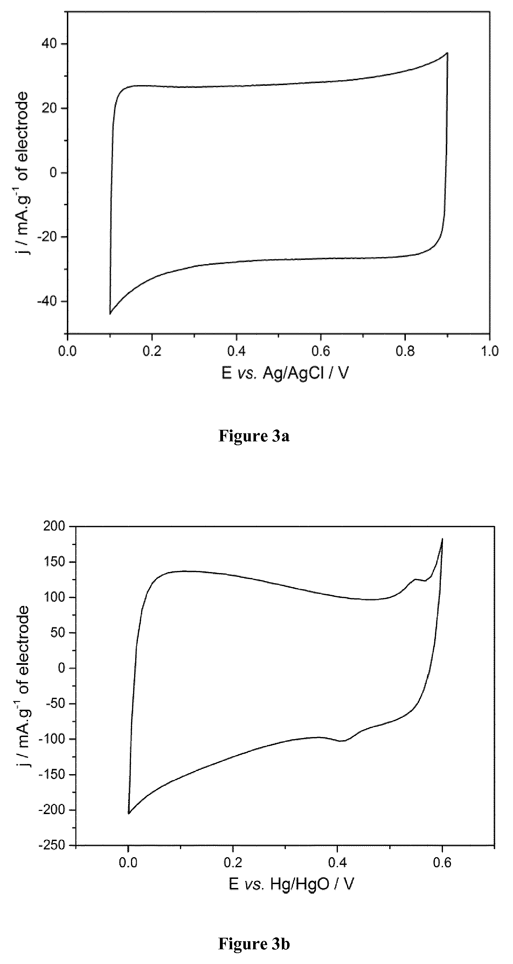

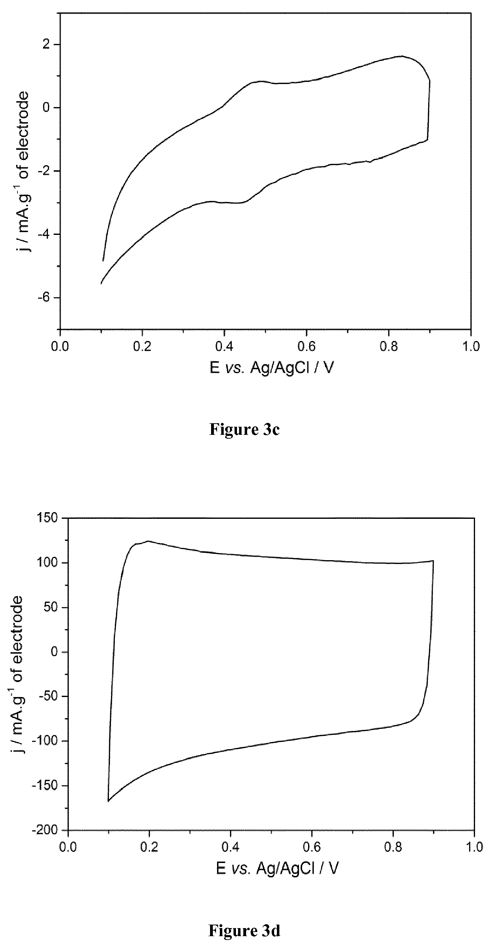

Voltammograms are obtained in different electrolytes as represented in figures 3a, 3b, 3c and 3d.

Contrary to what has been observed by Cao *et al.* with KOH electrolyte, weak faradic behavior is observed. Moreover in H₂SO₄ electrolyte, the behavior is also different from the work of Cao *et al.,* no charge/discharge symmetry and negligible capacity (0.1 to 0.5 C/g) is measured.

## Claims

1. Use as a pseudocapacitive electrode material for supercapacitors, of a metal oxide of formula
A₁₋ₓA'ₓCO_{1-y}ByO₃,
where
0≤x<1
0≤y<0.5
said metal oxide presents a perovskite crystal structure,
A represents a rare earth metal,
A' represents an alkaline earth metal,
B represents a transition metal, and
A, A' and B may be mixtures of metals
wherein said material is implemented on an electrode comprising a carbonaceous material and said material is loaded on said carbonaceous material with a loading mass greater than 5 mg/cm².

2. Use as in the preceding claim, wherein x varies between 0.10 and 0.90, in particular between 0.20 and 0.80; and more particularly between 0.30 and 0.60.

3. Use as in anyone of the preceding claims, wherein y varies between 0 and 0.40, in particular between 0 and 0.30; and more particularly between 0 and 0.20.

4. Use as in anyone of the preceding claims, wherein A represents an element of the lanthanide series, in particular La, Ce, Pr, Nd, Sm, Eu, Gd, Tb, Dy, Ho, Er, Tm, Yb or Lu, , more particularly La, Pr, Nd, Sm, Gd, Yb and even more particularly La and Gd.

5. Use as in anyone of anyone of the preceding claims, wherein A' represents Sr, Ca, Mg, Ba, Na or K, in particular Sr, Ca or Ba, alternatively Sr or Ca and more particularly Sr.

6. Use as in any one of the preceding claims, wherein B represents a transition metal chosen among Ni, Fe, Mn Ti, Cr, Cu, V and Zn, in particular chosen among Ni, Fe, Mn and Cr and more particularly chosen among Ni, Fe and Mn.

7. Use as in anyone of the preceding claims, wherein the metal oxide has the formula La₁₋ₓSrₓCoO₃ where 0≤x<0.90, in particular where 0.20≤x<0.80, and more particularly 0.30≤x<0.60.

8. Use as in anyone of the preceding claims, wherein the pseudocapacitive electrode material is loaded on said carbonaceous material with a loading mass ranging from 5 to 20 mg/cm², in particular ranging from 5 to 15 mg/cm² and more particularly ranging from 8 to 15 mg/cm².

9. Use as in anyone of the preceding claims, wherein the pseudocapacitive electrode material is under the form of nanometric particles and the average specific surface area of said nanometric particles ranges from 1 to 600 m²/g, in particular from 5 to 200 m²/g, and more particularly from 5 to 30 m²/g, according to BET measurements.

10. Use as in anyone of the preceding claims, wherein the supercapacitor is operating in an organic or aqueous electrolyte, in particular in aqueous electrolyte.

11. Pseudocapacitive electrode for supercapacitors, wherein the material of said pseudocapactive electrode comprises a pseudocapacitive electrode material as defined in anyone of the preceding claims.

12. Pseudocapacitive electrode as claimed in the preceding claim, wherein the electrode is a composite material additionally comprising a carbonaceous material, said carbonaceous material being selected from activated carbon, carbon black, graphene, mesoporous carbon, carbon fibers, porous graphite, graphitized carbon, graphite powder, oriented pyrolytic graphite, glassy carbon, carbon aerogel, single wall carbon nanotubes, multi-wall carbon nanotubes and a polymer that has been carbonized by exposure to high temperature in a non-oxidizing atmosphere.

13. Pseudocapacitive electrode as claimed in claim 11 or 12, wherein it presents a specific volumetric capacitance ranging between 100 and 1000 F/cm³, in particular between 100 and 800 F/cm³, in particular between 200 and 600 F/cm³ and more particularly between 200 and 500 F/cm³ relative to the crystallographic density.

14. Supercapacitor comprising at least an electrode as defined in anyone of claims 11 to 13.

15. Supercapacitor as claimed in the preceding claim, wherein it is an asymmetric system, in particular wherein one of the electrode is as defined in anyone of claims 11 to 13 and the other is an activated carbon electrode.

16. Use of a pseudocapacitive electrode as defined in anyone of claims 11 to 13 for manufacturing a supercapacitor.
